# EUROPÄISCHE PATENTSCHRIFT

(11) **EP 1 481 462 B1**
(45) Veröffentlichungstag und Bekanntmachung des Hinweises auf die Patenterteilung: **14.12.2005**
(21) Anmeldenummer: 03717190.7
(22) Anmeldetag: 19.02.2003
(51) Int. Cl.: H02K 11/02

(54) **ELEKTROMOTOR**
ELECTRIC MOTOR
MOTEUR ELECTRIQUE

(30) Priorität: 27.02.2002 DE 10208367
(43) Veröffentlichungstag der Anmeldung: 01.12.2004
(73) Patentinhaber: BSH Bosch und Siemens Hausgeräte GmbH, 81739 München (DE)
(72) Erfinder: BOGDAN, Kreca, 3310 Zalec (SI); MATJAZ, Purnat, 3330 Mozirje (SI); RADOVAN, Seifried, 2000 Maribor (SI)
(86) Internationale Anmeldenummer: PCT/EP2003/001674
(87) Internationale Veröffentlichungsnummer: WO 2003/073588

(56) Entgegenhaltungen:
- WO-A-03/010873
- DE-C- 19 902 433
- DE-U- 29 924 031
- GB-A- 2 172 754
- US-A- 4 673 837
- US-A- 5 196 750

## Beschreibung

Die vorliegende Erfindung betrifft einen Elektromotor mit einem hohlzylindrischen Motorgehäuse entsprechend dem Oberbegriff den Ansprüche 1 bzw. 5. (Siehe WO-A-03010873 bzw. GB-A-2 172 754).

Derartige Elektromotoren werden von der BSH Bosch und Siemens Hausgeräte GmbH zum Zeitpunkt der Einreichung dieser Anmeldung hergestellt. Sie werden eingesetzt bei Haushalts-Kleingeräten wie Stabmixem, Zitruspressen, Allesschneidern und dgl.. Derartige Kleingeräte weisen einen Gleichstrommotor auf, zu dem ein Kondensator als Funkentstörfilter parallel geschaltet ist. Bei diesen Motoren werden die Anschlussdrähte des Kondensators einerseits an einem elektrischen Anschlussstift für eine Kontaktbürste und andererseits an einem elektrisch leitenden Motorgehäuse angeschlossen. Die Anschlüsse entstehen durch Punktschweißen oder durch seitliches Einklemmen des Anschlussdrahtes in eine Vertiefung innerhalb des Lagerschildes.

Ein Elektromotor für einen Stabmixer ist beispielsweise bekannt aus der DE 198 10 873 A1. Auch dieser Motor weist einen in einem Motorgehäuse zwischen zwei Lagerschilden drehbar gelagerten Rotor auf. Auf einer Seite des Rotors ist ein Kommutator mit einer Kontaktfläche vorhanden, gegen die in dem ersten Lagerschild ausgebildete Kontaktbürsten mit Federspannung gleitend anliegen. Die Kontaktbürsten sind mit einer Leiterplatte verbunden, die sich in Richtung der Rotorachse erstreckt.

Es ist die Aufgabe der Erfindung, einen Elektromotor der eingangs genannten Art derart zu verbessern, dass elektrische Kontakte auf einfache Weise hergestellt werden.

Erfindungsgemäß wird diese Aufgabe bei einem Elektromotor mit den Merkmalen der unabhängigen Ansprüche 1 und 5 gelöst.

Durch die erfindungsgemäße Maßnahme wird eine einfache und sichere elektrische Verbindung zwischen dem zu dem Bauelement, beispielsweise einem Kondensator, führenden Anschlussdraht und dem Kontaktelement hergestellt. Es wird eine gute galvanische Verbindung geschaffen.

Bevorzugte Ausführungsformen der Erfindung ergeben sich aus den Unteransprüchen.

Besonders geeignet ist der Einsatz eines Kontaktelements, das auf seiner Unterseite eine zweite, im wesentlichen V-förmige Nut aufweist, die sich entgegen der Einsetzrichtung verjüngt. Dadurch, dass der Anschlussdraht zwischen zwei V-förmige Nuten eingeklemmt wird, wird der Draht an einer Stelle sehr präzise festgelegt.

Elektromotor nach Anspruch 1 oder 2, dadurch gekennzeichnet, dass das Kontaktelement als flaches Plättchen ausgebildet ist und dass die Vertiefung entsprechend dem Querschnitt des Kontaktelements schlitzförmig ist.

Bevorzugt besteht das Motorgehäuse aus einem elektrisch leitfähigen Material, und das Kontaktelement und/oder das Bauelement ist mit dem Motorgehäuse über einen zweiten Anschlussdraht elektrisch verbunden.

Ebenso bezieht sich die Erfindung auf einen Elektromotor mit einem hohlzylindrischen Motorgehäuse und einem in einem ersten und einem zweiten Lagerschild, die jeweils über einen Zentrierflansch in dem Motorgehäuse gelagert sind, gelagerten Rotor, sowie auf dem ersten Lagerschild angeordneten elektrischen Anschlüssen, von denen einer mit dem Motorgehäuse verbunden ist.

Dieser Motor ist bekannt (siehe oben). Auch hier besteht die Aufgabe, einen einfachen elektrischen Anschluss zu schaffen.

Erfindungsgemäß wird diese Aufgabe dadurch gelöst, dass das Motorgehäuse aus einem elektrisch leitfähigen Material besteht und dass der zweite Anschlussdraht zwischen dem Zentrierflansch des ersten Lagerschildes und dem Motorgehäuse eingelegt ist.

Durch diese Maßnahme wird ein Punktschweißvorgang eingespart, durch den bei herkömmlichen Elektromotoren das Ende eines Anschlussdrahtes auf die Außenseite des metallischen Motorgehäuses durch Punktschweißen angebracht ist.

Aufgrund der Erfindung entfällt auch der Einsatz einer Punktschweißmaschine. Der Kontaktiervorgang wird gleichzeitig mit dem Einpressen des Lagerschildes in das Motorgehäuse vorgenommen. Es entsteht eine sichere galvanische Verbindung zu dem Blechgehäuse des Motors, die eine ausreichende mechanische Festigkeit hat. An der äußeren Oberfläche des Motorgehäuses sind keine bei der Montage störenden Schweißpunkte mehr vorhanden.

Bevorzugt weist das Lagerschild an seinem Zentrierflansch, mit dem er in das Motorgehäuse hineingedrückt wird, eine sich in radialer Richtung erstreckende Ausbuchtung auf, an deren innerer Wandung oder auf deren Boden das Ende des zweiten Anschlussdrahtes aufgelegt ist. Das Motorgehäuse weist entsprechend eine Zunge auf, die das Ende des Anschlussdrahtes auf dem Boden der Ausbuchtung einklemmt.

Nachstehend wird die Erfindung in einem Ausführungsbeispiel anhand der Zeichnungen näher erläutert. Es zeigen:
- Figur 1: einen Lagerschild mit einem Kontaktelement in perspektivischer Ansicht,

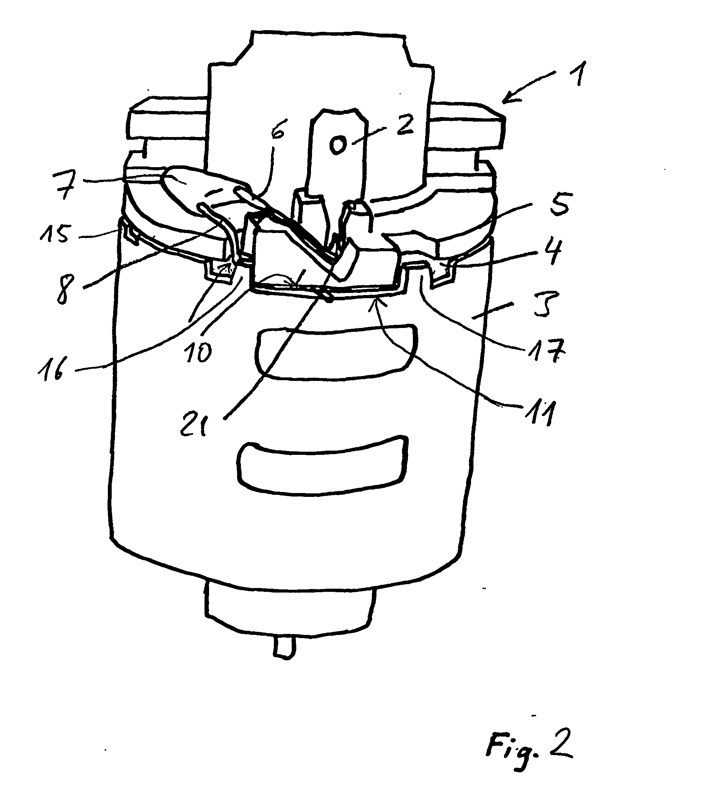

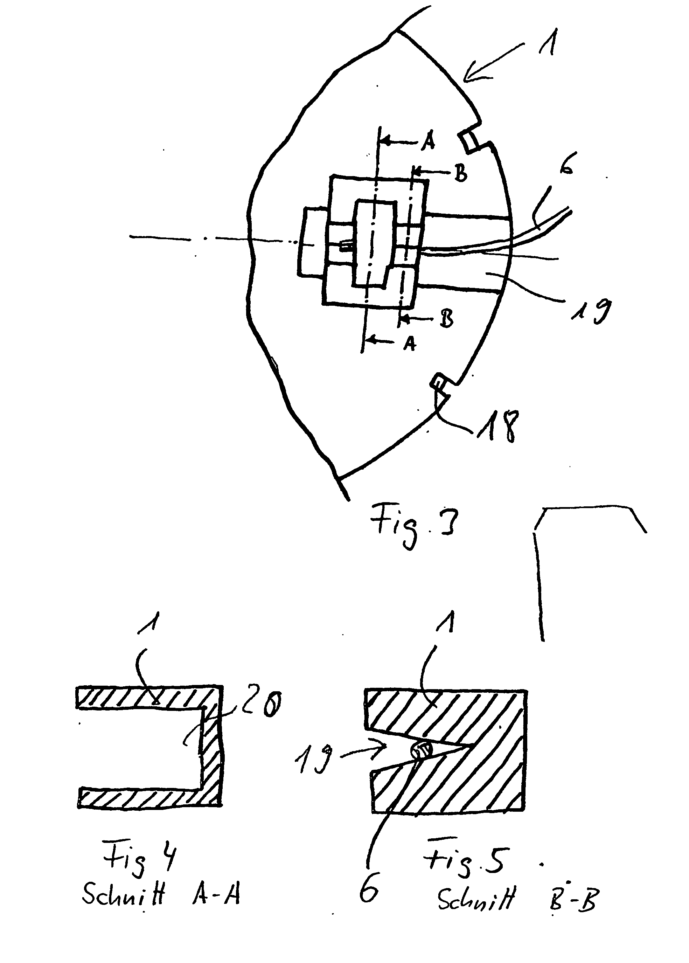

- Figur 2: den Lagerschild gemäß Figur 1 in Verbindung mit einem Motorgehäuse,
- Figur 3: eine Draufsicht auf einen Zentrierflansch des Lagerschildes,
- Figur 4: eine Schnittansicht entlang einer Linie A-A aus Figur 3 und
- Figur 5: eine Schnittansicht entlang einer Linie B-B aus Figur 4.

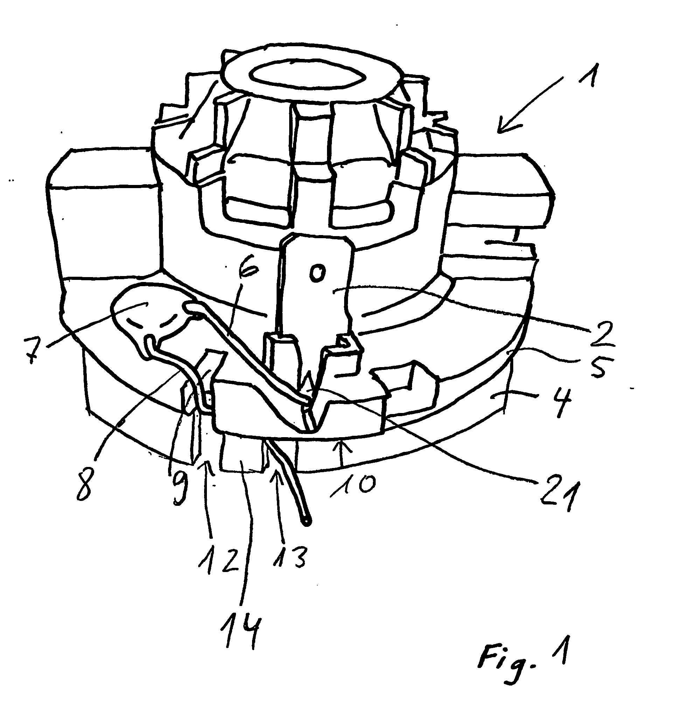

Ein Elektromotor weist einen Stator und einen Rotor auf. Der Rotor ist zwischen zwei Lagerschilden gelagert. Ein Lagerschild 1 (Fig. 1) trägt zwei elektrische Kontaktelemente 2. Die Kontaktelemente 2 stellen die elektrische Verbindung zwischen elektrischen Anschlüssen des Elektrogeräts und Kontaktbürsten des Elektromotors her. Dieser hat ein Gehäuse 3 (Fig. 3) aus Blech, das auf seiner Innenseite die Blechpakete des Stators aufnimmt. In das Gehäuse 3 sind beide Lagerschilde mittels eines Bundes 4 eines Zentrierflansches 5 hineingeschoben und im Presssitz mit dem Gehäuse 3 verbunden.

Das Kontaktelement 2 ist über einen Anschlussdraht 6, einen Kondensator 7 und einen Anschlussdraht 8 mit dem Gehäuse 3 verbunden. Der Anschlussdraht 8 liegt in einer Ausbuchtung 9 des Zentrierflansches 5 und ragt zwischen einer Unterkante 10 des Zentrierflansches 5 sowie einer Oberkante 11 des Gehäuses 3 heraus, so dass das Ende des Anschlussdrahtes 8 bündig zur äußeren Mantelwand des Gehäuses 3 sowie des Zentrierflansches 5 entfernbar ist. Bevorzugt hat der Bund 4 zwei Ausnehmungen 12, 13, durch die der Anschlussdraht 8 um einen Vorsprung 14 des Bundes 4 auf der Innenseite herum hindurchgeschoben ist.

Das Gehäuse 3 weist im Bereich seiner Oberkante 11 vorstehende Zungen 15, 16, 17 auf, die zur Befestigung des Lagerschildes 1 an dem Gehäuse 3 nach innen gebogen werden. Dabei liegt die Zunge 15 auf einem Boden 18 (Fig. 3) der Ausbuchtung 9 auf und klemmt den Anschlussdraht 8 gegen den Boden 18.

Der Anschlussdraht 6 ist dadurch fest gegenüber dem Lagerschild 1 eingeklemmt, dass dieser in eine V-förmige Nut 19 eingebracht ist. In der Nut 19 ist eine schlitzförmige Vertiefung 20 angeordnet, die im wesentlichen unter einem rechten Winkel zur Richtung der Nut 19 verläuft. Die Vertiefung 20 nimmt das Kontaktelement 2 auf. Dieses drückt beim Hineinschieben in die Vertiefung 20 den Anschlussdraht 6 nach unten in die Vertiefung, so dass dieser festgeklemmt wird.

Zusätzlich weist das Kontaktelement 2 auf seiner Unterseite ebenfalls eine V-förmige Nut 21 auf, so dass der Anschlussdraht beidseitig sehr genau lokalisiert eingeklemmt wird.

## Patentansprüche

1. Elektromotor mit einem hohlzylindrischen Motorgehäuse (3), in dem ein Rotor durch ein erstes und ein zweites, jeweils einen Zentrierflansch (5) aufweisendes Lagerschild (1) gelagert ist, sowie mit einem diskreten elektrischen Bauelement (7), das zu elektrischen Anschlüssen des Elektromotors parallel geschaltet ist, die von Kontaktelementen (2) gebildet werden, die auf dem ersten Lagerschild (1) angeordnet sind, wobei das Bauelement (7) über einen ersten Anschlussdraht (6) mit wenigstens einem der Kontaktelement (2) verbunden ist, **dadurch gekennzeichnet, dass** das Kontaktelement (2) in eine Vertiefung (20) einer sich im wesentlichen V-förmig in Einsetzrichtung verjüngenden Nut (19) hineingedrückt ist, in die der erste Anschlussdraht (6) eingelegt ist.

2. Elektromotor nach Anspruch 1, **dadurch gekennzeichnet, dass** das Kontaktelement (2) auf seiner Unterseite eine zweite, im wesentlichen V-förmige Nut (21) aufweist, die sich entgegen der Einsetzrichtung verjüngt.

3. Elektromotor nach Anspruch 1 oder 2, **dadurch gekennzeichnet, dass** das Kontaktelement (2) als flaches Plättchen ausgebildet ist und dass die Vertiefung (20) entsprechend dem Querschnitt des Kontaktelements (2) schlitzförmig ist.

4. Elektromotor nach einem der Ansprüche 1 bis 3, **dadurch gekennzeichnet, dass** das Motorgehäuse (3) aus einem elektrisch leitfähigen Material besteht und dass ein zweiter Anschlussdraht (8) des Bauelements (7) zwischen dem Zentrierflansch (5) des ersten Lagerschildes (1) und dem Motorgehäuse (3) eingelegt ist.

5. Elektromotor mit einem hohlzylindrischen Motorgehäuse (3), in dem ein Rotor durch ein erstes und ein zweites, jeweils einen Zentrierflansch (5) aufweisendes Lagerschild (1) gelagert ist, auf dem elektrische Anschlüsse (2) angeordnet sind, von denen einer mit dem Motorgehäuse (3) verbunden ist, das aus einem elektrisch leitfähigen Material besteht, wobei ein erster Anschlussdraht (6) eines diskreten elektrischen Bauelements (7) mit wenigstens einem Kontaktelement (2) verbunden ist und ein zweiter Anschlussdraht (8) des Bauelements (7) zwischen dem Zentrierflansch (5) des ersten Lagerschildes (1) und dem Motorgehäuse (3) eingelegt ist, wobei der Zentrierflansch (5) eine sich in radialer Richtung erstrekkende Ausbuchtung (9) aufweist, **dadurch gekennzeichnet, dass** auf dem Boden (18) der Ausbuchtung (9) das Ende des zweiten Anschlussdrahtes (8) aufgelegt ist, und dass das Motorgehäuse eine Zunge (16) aufweist, durch die das Ende des Anschlussdrahtes (8) auf dem Boden (18) der Ausbuchtung (9) eingeklemmt ist.

## Claims

1. Electric motor with a hollow-cylindrical motor housing (3) in which a rotor is mounted by a first and a second bearing plate (1) each having a respective centring flange (5), as well as with a discrete electrical component (7) which is connected in parallel with the electrical terminals of the electric motor, the terminals being formed by contact elements (2) arranged on the first bearing plate (1), wherein the component (7) is connected with at least one of the contact elements (2) by way of a first connecting wire (6), **characterised in that** the contact element (2) is pressed into a depression (20) of a groove (19) which tapers in substantially V-shaped manner in insertion direction and in which the first connecting wire (6) is laid.

2. Electric motor according to claim 1, **characterised in that** the contact element (2) has on its underside a second substantially V-shaped groove (21) which tapers against the direction of insertion.

3. Electric motor according to claim 1 or 2, **characterised in that** the contact element (2) is constructed as a flat small plate and that the depression (20) is slot-shaped in correspondence with the cross-section of the contact element (2).

4. Electric motor according to one of claims 1 to 3, **characterised in that** the motor housing (3) consists of an electrically conductive material and that a second connecting wire (8) of the component (7) is laid between the centring flange (5) of the first bearing plate (1) and the motor housing (3).

5. Electric motor with a hollow-cylindrical motor housing (3), in which a rotor is mounted by first and second bearing plates (1), which each have a centring flange (5) and on which are arranged electrical connections (2), of which one is connected with the motor housing (3), which consists of an electrically conductive material, wherein a first connecting wire (6) of a discrete electrical component (7) is connected with at least one contact element (2) and a second connecting wire (8) of the component (7) is laid between centring flange (5) of the first bearing plate (1) and the motor housing (3), wherein the centring flange (5) has a bulge (9) extending in radial direction, **characterised in that** the end of the second connecting wire (8) is placed on the base (18) of the bulge (9) and that the motor housing has a tongue (16) by which the end of the connecting wire (8) is clamped in place on the base (18) of the bulge (9).

## Revendications

1. Moteur électrique avec un bâti de moteur cylindrique creux (3) dans lequel un rotor est monté dans une première et une deuxième flasque (1) comportant chacune une bride de centrage (5) ainsi qu'avec un composant électrique discret (7) qui est branché en parallèle avec des connexions électriques du moteur électrique qui sont formées par des éléments de contact (2) qui sont disposés sur la première flasque (1), le composant (7) étant relié par l'intermédiaire d'un premier fil de connexion (6) à au moins l'un des éléments de contact (2), **caractérisé en ce que** l'élément de contact (2) est poussé dans un creux (20) d'une rainure (19) qui se rétrécit sensiblement en forme de V dans le sens de montage et dans laquelle le premier fil de connexion (6) est placé.

2. Moteur électrique selon la revendication 1, **caractérisé en ce que** l'élément de contact (2) comporte sur son côté inférieur une deuxième rainure (21) globalement en forme de V qui se rétrécit dans le sens contraire du sens de montage.

3. Moteur électrique selon la revendication 1 ou 2, **caractérisé en ce que** l'élément de contact (2) est conçu comme une petite plaque plate et **en ce que** le creux (20) est en forme de fente suivant la section transversale de l'élément de contact (2).

4. Moteur électrique selon l'une des revendications 1 à 3, **caractérisé en ce que** le bâti de moteur (3) est en un matériau électriquement conducteur et **en ce qu'**un deuxième fil de connexion (8) du composant (7) est placé entre la bride de centrage (5) de la première flasque (1) et le bâti de moteur (3).

5. Moteur électrique avec un bâti de moteur cylindrique creux (3) dans lequel un rotor est monté dans une première et une deuxième flasque (1) qui comporte chacune une bride de centrage (5) et sur laquelle sont disposées des connexions électriques (2) dont l'une est reliée au bâti de moteur (3) qui est en un matériau électriquement conducteur, un premier fil de connexion (6) d'un composant électrique discret (7) étant relié à au moins un élément de contact (2) et un deuxième fil de connexion (8) du composant (7) étant placé entre la bride de centrage (5) de la première flasque (1) et le bâti de moteur (3), la bride de centrage (5) comportant une encoche (9) qui s'étend en direction radiale, **caractérisé en ce que** l'extrémité du deuxième fil de connexion (8) est placée sur le fond (18) de l'encoche (9) et **en ce que** le bâti de moteur comporte une languette (16) par laquelle l'extrémité du fil de connexion (8) est coincée sur le fond (18) de l'encoche (9).
